# FASCICULE DE BREVET EUROPEEN

(11) **EP 3 347 321 B1**
(45) Date de publication et mention de la délivrance du brevet: **12.06.2019**
(21) Numéro de dépôt: 16775779.8
(22) Date de dépôt: 05.09.2016
(51) Int. Cl.: C03C 17/36

(54) **VITRAGE COMPRENANT UN REVETEMENT FONCTIONNEL**
VERGLASUNG MIT FUNKTIONSBESCHICHTUNG
GLAZING COMPRISING A FUNCTIONAL COATING

(30) Priorité: 08.09.2015 FR 1558307
(43) Date de publication de la demande: 18.07.2018
(73) Titulaire: Saint-Gobain Glass France, 92400 Courbevoie (FR)
(72) Inventeur: SINGH, Laura, 75011 Paris (FR); DODET, Rémy, 93220 Gagny (FR)
(74) Mandataire: Saint-Gobain Recherche
(86) Numéro de dépôt international: PCT/FR2016/052196
(87) Numéro de publication internationale: WO 2017/042462

(56) Documents cités:
- EP-A1- 0 847 965
- EP-A1- 0 912 455
- EP-A1- 0 937 013
- EP-A2- 0 678 484
- EP-A2- 0 718 250
- WO-A1-2010/072973
- WO-A2-2005/000761

## Description

L'invention concerne un matériau et un procédé de préparation d'un matériau, tel qu'un vitrage, comprenant un substrat transparent revêtu d'un empilement de couches minces comprenant un revêtement fonctionnel agissant sur le rayonnement infrarouge.

Un revêtement fonctionnel comprend au moins une couche fonctionnelle. On entend par couche "fonctionnelle", au sens de la présente demande, la (ou les) couche(s) de l'empilement qui lui confère l'essentiel de ses propriétés thermiques. La couche fonctionnelle agit sur le rayonnement solaire et/ou thermique essentiellement par réflexion et/ou absorption du rayonnement infrarouge proche (solaire) ou lointain (thermique).

Ces revêtements fonctionnels sont déposés entre des revêtements à base de matériaux diélectriques comprenant généralement plusieurs couches diélectriques (ci-après revêtements diélectriques) qui permettent d'ajuster les propriétés optiques de l'empilement. Les revêtements fonctionnels agissent sur le flux de rayonnement solaire traversant ledit vitrage, par opposition aux autres revêtements diélectriques ayant pour fonction une protection chimique ou mécanique du revêtement fonctionnel.

Selon les climats des pays où sont installés ces vitrages, les performances en termes de transmission lumineuse et de facteur solaire recherchées peuvent varier dans une certaine gamme.

Dans les pays où les niveaux d'ensoleillement sont élevés, il existe une demande forte de vitrage présentant une transmission lumineuse (TL) d'environ 50 à 55 %, des valeurs de facteur solaire (g) inférieures à 0,47 et une sélectivité (s) supérieure à 1,0 et mieux supérieure à 1,1. La transmission lumineuse est alors suffisamment élevée pour que la diminution de la quantité de lumière pénétrant à l'intérieur de l'espace délimité par ledit vitrage ne rende pas obligatoire l'utilisation de la lumière artificielle.

Selon l'invention, on entend :
- facteur solaire « g », le rapport entre l'énergie totale entrant dans le local à travers le vitrage et l'énergie solaire incidente,
- sélectivité « s », le rapport entre la transmission lumineuse et le facteur solaire TL/g.

Les empilements les plus performants comprennent une couche fonctionnelle à base d'argent (ou couche d'argent). Ces couches d'argent sont utiles à plusieurs titres : en réfléchissant le rayonnement infrarouge, thermique ou solaire, elles impartissent au matériau des fonctions de basse émissivité ou de contrôle solaire. Conductrices de l'électricité, elles permettent également d'obtenir des matériaux conducteurs, par exemple des vitrages chauffants ou des électrodes.

Cependant, ces couches d'argent sont très sensibles à l'humidité. Elles sont pour cela exclusivement utilisées dans des doubles vitrages, en face 2 ou 3 de celui-ci, en numérotant les faces du ou des substrats de l'extérieur vers l'intérieur du bâtiment ou de l'habitacle qu'il équipe. De telles couches ne sont en général pas déposées sur des vitrages simples (aussi appelés monolithiques).

Il existe également des empilements de couche mince comprenant comme couches fonctionnelles des couches à base de niobium métallique ou nitruré, telles que décrites par exemple dans la demande WO 01/21540 ou encore dans la demande WO 2009/112759. Au sein de telles couches, le rayonnement solaire comprenant le rayonnement proche IR (c'est-à-dire dont la longueur d'onde est compris entre environ 780 nm et 2500 nm) et le rayonnement visible (dont la longueur d'onde est compris entre environ et 380 et 780 nm) sont absorbés de manière non sélective par la couche fonctionnelle à base de niobium.

La demande internationale de brevet WO 2010/072973 A1 décrit un matériau comprenant un substrat transparent revêtu d'un empilement de couches minces comprenant:
- une couche métallique d'argent (140) présentant une épaisseur de 12 nm,
- une couche de blocage métallique de NiCr (150) présentant une épaisseur de 1 nm,
- deux couches fonctionnelles (absorbantes) de nitrure de niobium NbN (165, 123) présentant une épaisseur de 1 nm pour la couche (165) et une épaisseur de 5 nm pour la couche (123).

L'empilement décrit dans ce document comprend des couches autres que des couches de blocage intercalées entre la ou les couches fonctionnelles métalliques à base de niobium et la ou les couches fonctionnelles à base d'argent, notamment des couches de Si₃N₄, SnZnO et ZnO. De plus, la somme des épaisseurs de toutes les couches intercalées entre la ou les couches fonctionnelles métalliques à base de niobium et la ou les couches fonctionnelles à base d'argent d'un revêtement fonctionnel est supérieure à 5 nm.

Les empilements comprenant une couche fonctionnelle à base de niobium présentent pour avantage d'être moins chers et plus résistants que ceux comprenant des couches d'argent. Cependant, dans la mesure où ces couches fonctionnelles absorbent de manière non sélective le rayonnement solaire, les matériaux les comprenant ne présentent pas des propriétés optiques suffisantes. L'absorption et l'émissivité sont trop élevées et la sélectivité trop faible. En particulier, ces matériaux ne présentent pas, en général, pour une transmission lumineuse d'environ 50 % et une émissivité inférieure à 50 %. L'émissivité est dans ce cas de l'ordre de 60 %.

Fréquemment, ces matériaux doivent subir des traitements thermiques à température élevés, destinés à améliorer les propriétés du substrat et/ou de l'empilement de couches minces. Il peut par exemple s'agir, dans le cas de substrats en verre, de traitement de trempe thermique destinés à renforcer mécaniquement le substrat. Ces traitements peuvent modifier certaines propriétés de l'empilement, notamment les propriétés énergétiques et optiques.

Idéalement, les matériaux doivent être capables de subir, une fois revêtu de l'empilement, un traitement thermique du type trempe, recuit ou encore bombage, sans variation significative, ou au moins sans dégradation, de leurs propriétés optiques et/ou énergétiques initiales. En particulier, après le traitement thermique, les matériaux doivent conserver une transmission lumineuse acceptable et présenter une émissivité de préférence sensiblement améliorée, ou tout au moins sensiblement inchangée.

La résistance mécanique et chimique de ces matériaux comprenant des empilements complexes soumis à des traitements thermiques à température élevée est souvent insuffisante et cela, a fortiori, lorsque les couches fonctionnelles sont des couches métalliques à base d'argent. Cette faible résistance se traduit par l'apparition à court terme de défauts tels que des points de corrosion, des rayures, voire de l'arrachement total ou partiel de l'empilement lors de son utilisation dans des conditions normales. Tous défauts ou rayures, qu'ils soient dus à la corrosion, à des sollicitations mécaniques ou à une faible adhésion entre couches adjacentes, sont susceptibles d'altérer non seulement l'esthétique du substrat revêtu mais également ses performances optiques et énergétiques.

L'invention consiste donc en la mise au point de nouveaux matériaux, en vue de fabriquer des vitrages de protection solaire améliorés. L'amélioration visée est notamment l'établissement d'un meilleur compromis entre les propriétés thermiques et optiques tout en maintenant une résistance chimique et mécanique élevée.

Plus précisément, le matériau muni d'un empilement doit présenter un coefficient d'émissivité, tel que défini selon la norme européenne EN 410, suffisamment faible notamment inférieure à 35 % ou inférieure à 30 %, voire inférieure à 25 %. De telles valeurs permettent d'obtenir un coefficient de transmission thermique (Ug) inférieur à 4 en simple vitrage tel que défini selon la norme européenne EN 673.

Le matériau de l'invention doit également présenter tout à la fois ces propriétés d'isolation thermique renforcées et une forte transmission lumineuse, par exemple un facteur de transmission lumineuse TL supérieur à 45%, de préférence proche d'au moins 50%, voire même supérieure à 50%.

Enfin, un autre but est de fournir un matériau muni d'un empilement apte à supporter les traitements thermiques sans dommage notamment quand le substrat porteur de l'empilement est de type verrier. Cela se traduit par une absence de variation de ses propriétés thermiques et optiques avant et après traitement thermique, notamment du type trempe.

L'invention concerne un matériau comprenant un substrat transparent revêtu d'un empilement de couches minces comprenant au moins un revêtement fonctionnel comprenant :
- au moins une couche fonctionnelle métallique à base d'argent présentant une épaisseur comprise entre 2 et 15 nm,
- éventuellement au moins une couche de blocage choisie parmi les couches métalliques, les couches de nitrure métallique, les couches d'oxyde métallique et les couches d'oxynitrure métallique d'un ou plusieurs éléments choisis parmi le titane, le nickel, le chrome et le tantale telles que Ti, TiN, TiOx, Ta, TaN, Ni, NiN, Cr, CrN, NiCr, NiCrN,
- au moins une couche fonctionnelle métallique ou nitrurée à base de niobium située :
   - au contact d'au moins une partie de la couche fonctionnelle à base d'argent ou
   - séparée d'au moins une partie de la couche fonctionnelle à base d'argent par une ou plusieurs couches, choisies parmi des couches de blocage, dont la somme des épaisseurs est inférieure à 5 nm,
- la somme des épaisseurs de la ou les couches fonctionnelles à base de niobium situées directement au-contact ou séparée par une épaisseur inférieure à 5 nm d'au moins une partie de la couche fonctionnelle à base d'argent, est comprise entre 4 et 20 nm.

Selon l'invention,
« au moins une couche fonctionnelle métallique ou nitrurée à base de niobium est séparée d'au moins une partie de la couche fonctionnelle à base d'argent par une ou plusieurs couches,
choisies parmi des couches de blocage,
dont la somme des épaisseurs est inférieure à 5 nm ».
signifie que :
- seules des couches de blocage peuvent s'intercaler entre la ou les couches fonctionnelles métalliques à base de niobium et la ou les couches fonctionnelles à base d'argent d'un revêtement fonctionnel et
- la somme des épaisseurs de toutes les couches susceptibles de s'intercaler entre la ou les couches fonctionnelles métalliques à base de niobium et la ou les couches fonctionnelles à base d'argent d'un revêtement fonctionnel est inférieure à 5 nm.

Lorsqu'une ou plusieurs couches « sépare » la couche fonctionnelle métallique ou nitrurée à base de niobium et la couche fonctionnelle à base d'argent :
- la somme de leurs épaisseurs est inférieure à 5 nm et
- elles sont choisies parmi des couches de blocage.

De préférence, chaque couche métallique à base d'argent est disposée au contact et entre une ou plusieurs couches fonctionnelles métalliques ou nitrurées à base de niobium et/ou une ou plusieurs couches de blocage.

L'invention concerne également :
- le procédé de préparation d'un matériau selon l'invention,
- le vitrage comprenant au moins un matériau selon l'invention,
- l'utilisation d'un vitrage selon l'invention en tant que vitrage de contrôle solaire pour le bâtiment ou les véhicules,
- un bâtiment ou un véhicule comprenant un vitrage selon l'invention.

Le demandeur a découvert de manière surprenante que l'utilisation d'un revêtement fonctionnel comprenant au moins deux couches, une couche à base d'argent et une couche à base de niobium, permet d'obtenir un excellent compromis entre les propriétés optiques et thermiques et la résistance chimique et mécanique.

La solution de l'invention, en utilisant la combinaison d'une fine couche d'argent et d'une couche de niobium, combine les avantages des empilements comprenant une couche fonctionnelle à l'argent, en terme de propriétés optiques et thermiques, ainsi que les avantages des empilements comprenant une couche fonctionnelle au niobium, en terme de coût mais surtout de résistance mécanique et chimique.

Selon l'invention, un matériau présentant les caractéristiques suivantes a pu être obtenu notamment lorsqu'il est utilisé en simple vitrage:
- une transmission lumineuse, par ordre de préférence croissant, supérieure ou égale à 40 %, supérieure ou égale à 45 %, supérieure ou égale à 50%, comprise entre 50 et 55 %,
- une valeur de facteur solaire (g), par ordre de préférence croissant, inférieure à 49 %, 48% 47 % 46 %, 45 %.
- une émissivité inférieure ou égale à 40 %, de préférence inférieure ou égale à 35 % ou même inférieure ou égale à 30 %, voire inférieure ou égale à 25 %,
- une sélectivité (s) supérieure à 1,0, de préférence supérieure à 1,1,
- une bonne durabilité chimique et mécanique.

Les caractéristiques préférées qui figurent dans la suite de la description sont applicables aussi bien au matériau selon l'invention que, le cas échéant, au procédé selon l'invention.

Toutes les caractéristiques lumineuses présentées dans la présente description sont obtenues selon les principes et méthodes décrits dans la norme européenne EN 410 et EN 673 se rapportant à la détermination des caractéristiques lumineuses et solaires des vitrages utilisés dans le verre pour la construction.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

Une couche fonctionnelle métallique à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

La couche métallique fonctionnelle à base d'argent peut également comprendre des éléments dopants choisis, par exemple, parmi le cuivre, le palladium, l'or ou le platine. Selon l'invention, on entend par « élément dopants », des éléments non choisis parmi l'argent et le niobium. De préférence, chacun de ces autres éléments dopants représentent moins de 15 %, moins de 10 %, moins de 5%, moins de 1 %, moins de 0,5 % en masse du revêtement fonctionnel. Les proportions maximum d'élément dopant dépendent de la nature de l'élément dopant.

De préférence, la couche métallique fonctionnelle à base d'argent comprend moins de 5%, de préférence moins de 1,0%, voire moins de 0,5 % en masse d'éléments dopants par rapport à la masse du revêtement fonctionnel métallique à base d'argent.

L'épaisseur des couches fonctionnelles à base d'argent, correspondant à la somme des épaisseurs des couches fonctionnelles à base d'argent dans un revêtement fonctionnel, est par ordre de préférence croissant comprise de 2 à 10 nm, de 3 à 8 nm, de 4 à 7 nm, de 3 à 7 nm, de 3 à 6 nm, de 4 à 6 nm.

Le revêtement fonctionnel comprend au moins une couche fonctionnelle métallique ou nitrurée à base de niobium (ci-après couche fonctionnelle à base de niobium) située :
- au contact d'au moins une partie de la couche fonctionnelle à base d'argent ou
- séparée d'au moins une partie de la couche fonctionnelle à base d'argent par une ou plusieurs couches, choisies parmi des couches de blocage, dont la somme des épaisseurs est inférieure à 5 nm,

Une couche fonctionnelle métallique à base de niobium comprend au moins 95,0 %, de préférence au moins 96,5 % et mieux au moins 98,0 % en masse de niobium par rapport à la masse de la couche fonctionnelle. De préférence, la couche métallique fonctionnelle à base de niobium comprend moins de 1,0 % en masse de métaux autres que du niobium par rapport à la masse de la couche métallique fonctionnelle à base d'argent.

Une couche fonctionnelle nitrurée à base de niobium comprend au moins 95,0 %, de préférence au moins 96,5 % et mieux au moins 98,0 % en masse de niobium par rapport à la masse d'éléments autres que de l'azote constituant la couche fonctionnelle nitrurée à base de niobium. De préférence, la couche fonctionnelle nitrurée à base de niobium comprend moins de 1,0 % en masse d'éléments autres que du niobium et de l'azote par rapport à la masse de la couche fonctionnelle nitrurée à base de niobium.

Selon un mode de réalisation, le revêtement fonctionnel comprend au moins une couche fonctionnelle à base de niobium située au-dessus d'au moins une partie de la couche fonctionnelle à base d'argent. Cette couche présente une épaisseur comprise entre 2 et 10 nm, de préférence 2,5 et 8 nm et mieux 3 et 5 nm. Avantageusement, la couche fonctionnelle à base de niobium est située au-dessus et directement au contact d'au moins une partie de la couche fonctionnelle à base d'argent.

Selon un mode de réalisation, le revêtement fonctionnel comprend au moins une couche fonctionnelle à base de niobium située en-dessous d'au moins une partie de la couche fonctionnelle à base d'argent. Cette couche présente une épaisseur comprise entre 1 et 10 nm ou entre 2 et 10 nm, de préférence 1,5 et 5 nm et mieux 1,5 et 3 nm. La couche fonctionnelle à base de niobium peut-être située en-dessous et directement au contact d'au moins une partie de la couche fonctionnelle à base d'argent.

La couche fonctionnelle à base d'argent peut être située entre deux couches fonctionnelles à base de niobium. La somme des épaisseurs des couches fonctionnelle à base de niobium situées directement au-contact ou séparée par une épaisseur inférieure à 5 nm d'au moins une partie de la couche fonctionnelle à base d'argent, est comprise entre 3 et 10 nm, entre 4 et 8 nm, entre 5 et 7 nm.

Le rapport de la somme des épaisseurs des couches fonctionnelles à base de niobium sur la somme des épaisseurs des couches métalliques fonctionnelles à base d'argent d'un même revêtement fonctionnel est, par ordre de préférence croissant :
- supérieur à 0,9, supérieur à 1,0, supérieur à 1,1, supérieur à 1,2,
- compris entre 1,0 et 4,0, compris entre 1,0 et 2,0.

Les couches fonctionnelles à base de niobium peuvent également être séparées d'au moins une partie de la couche fonctionnelle à base d'argent par une ou plusieurs couches de blocage dont la somme des épaisseurs est, par ordre de préférence croissant, inférieure à 5 nm, inférieure à 4, inférieure à 3 nm, inférieure à 2 nm inférieure à 1 nm.

Selon l'invention, on considère que la ou les couches de blocage situées au contact des couches fonctionnelles métalliques à base d'argent et/ou des couches fonctionnelles métalliques ou nitrurées à base de niobium d'un même revêtement fonctionnel appartiennent au revêtement fonctionnel.

Ces couches de blocage sont choisies parmi les couches métalliques, les couches de nitrure métallique, les couches d'oxyde métallique et les couches d'oxynitrure métallique d'un ou plusieurs éléments choisis parmi le titane, le nickel, le chrome et le tantale telles que Ti, TiN, TiOx, Ta, TaN, Ni, NiN, Cr, CrN, NiCr, NiCrN. Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Selon différents modes de réalisation, le revêtement fonctionnel comprend :
- une couche de blocage située en-dessous et/ou au-dessus d'une couche métallique fonctionnelle à base d'argent, de préférence au-contact de ladite couche métallique fonctionnelle à base d'argent, et/ou
- une couche de blocage située en-dessous et/ou au-dessus d'une couche fonctionnelle métallique ou nitrurée à base de niobium, de préférence au-contact de ladite couche fonctionnelle à base de niobium.

Selon un mode de réalisation avantageux, le revêtement fonctionnel commence et/ou se termine par une couche de blocage, de préférence choisie parmi les couches métalliques notamment d'un alliage de nickel et de chrome (NiCr). Le revêtement fonctionnel « commence par un couche de blocage » signifie que la première couche du revêtement fonctionnel par rapport au substrat est une couche de blocage. Le revêtement fonctionnel « se termine par un couche de blocage » signifie que la dernière couche du revêtement fonctionnel par rapport au substrat est une couche de blocage.

L'épaisseur d'une couche de blocage est de préférence :
- d'au moins 0,2 nm, d'au moins 0,5 nm ou d'au moins 0,8 nm et/ou
- d'au plus 2,0 nm.

Les revêtements fonctionnels sont déposés entre des revêtements diélectriques. Selon ce mode de réalisation, l'empilement de couches minces comprend au moins un revêtement fonctionnel et au moins deux revêtements diélectriques comportant au moins une couche diélectrique, de manière à ce que chaque revêtement fonctionnel soit disposé entre deux revêtements diélectriques.

Les revêtements fonctionnels présentent, par ordre de préférence croissant, une épaisseur comprise entre 5 et 20 nm, 8 et 15 nm, 10 et 13 nm.

L'empilement de couches minces peut comprendre un seul revêtement fonctionnel. L'empilement est situé sur au moins une des faces du substrat transparent.

Un exemple d'empilement convenant selon l'invention comprend :
- un revêtement diélectrique situé en-dessous du revêtement fonctionnel,
- un revêtement fonctionnel,
- un revêtement diélectrique situé au-dessus du revêtement fonctionnel,
- éventuellement une couche de protection.

Les revêtements diélectriques présentent une épaisseur supérieure à 15 nm, de préférence comprise entre 15 et 100 nm, 20 et 70 nm et mieux entre 30 et 60 nm.

Les couches diélectriques des revêtements diélectriques présentent les caractéristiques suivantes seules ou en combinaison :
- elles sont déposées par pulvérisation cathodique assistée par champ magnétique,
- elles sont choisies parmi les oxydes ou nitrures d'un ou plusieurs éléments choisi(s) parmi le titane, le silicium, l'aluminium, le zirconium, l'étain et le zinc,
- elles ont une épaisseur supérieure à 2 nm, de préférence comprise entre 2 et 100 nm.

De préférence, les couches diélectriques présentent une fonction barrière. On entend par couches diélectriques à fonction barrière (ci-après couche barrière), une couche en un matériau apte à faire barrière à la diffusion de l'oxygène et de l'eau à haute température, provenant de l'atmosphère ambiante ou du substrat transparent, vers la couche fonctionnelle. Les couches barrières peuvent être à base de composés de silicium et/ou d'aluminium choisis parmi les oxydes tels que SiO₂, les nitrures tels que les nitrure de silicium Si₃N₄ et les nitrures d'aluminium AIN, et les oxynitrures SiOₓN_{y}, éventuellement dopé à l'aide d'au moins un autre élément. Les couches barrières peuvent également être à base d'oxyde de zinc et d'étain.

Selon un mode de réalisation, l'empilement de couches minces comprend au moins un revêtement diélectrique comportant au moins une couche diélectrique constituée d'un nitrure ou d'un oxynitrure d'aluminium et/ou de silicium ou d'un oxyde mixte de zinc et d'étain, de préférence d'épaisseur comprise entre 20 et 70 nm.

L'empilement peut notamment comprendre une couche diélectrique à base de nitrure de silicium et/ou d'aluminium située en-dessous et/ou au-dessus d'au moins une partie du revêtement fonctionnel. La couche diélectrique à base de nitrure de silicium et/ou d'aluminium a une épaisseur :
- inférieure ou égale à 100 nm, inférieure ou égale à 80 nm ou inférieure ou égale à 60 nm, et/ou
- supérieure ou égale à 15 nm, supérieure ou égale à 20 nm ou supérieure ou égale à 30 nm.

Le ou les revêtements diélectriques situés en-dessous d'un revêtement fonctionnel peuvent comporter une seule couche constituée d'un nitrure ou d'un oxynitrure d'aluminium et/ou de silicium, d'épaisseur comprise entre 30 et 70 nm, de préférence d'une couche constituée de nitrure de silicium, comprenant en outre éventuellement de l'aluminium.

Le ou les revêtements diélectriques situés au-dessus d'un revêtement fonctionnel peuvent comporter :
- au moins couche constituée d'un nitrure ou d'un oxynitrure d'aluminium et/ou de silicium, d'épaisseur comprise entre 30 et 60 nm, de préférence d'une couche constituée de nitrure de silicium, comprenant en outre éventuellement de l'aluminium,
- éventuellement au moins une couche de protection d'épaisseur comprise entre 2 et 10 nm.

L'empilement de couches minces peut éventuellement comprendre une couche de protection. La couche de protection est de préférence la dernière couche de l'empilement, c'est-à-dire la couche la plus éloignée du substrat revêtu de l'empilement (avant traitement thermique). Ces couches ont en général une épaisseur comprise entre 2 et 10 nm, de préférence 2 et 5 nm. Cette couche de protection peut être choisie parmi une couche de titane, de zirconium, d'hafnium, de silicium, de zinc et/ou d'étain, ce ou ces métaux étant sous forme métallique, oxydée ou nitrurée.

Selon un mode de réalisation, la couche de protection est à base d'oxyde de zirconium et/ou de titane, de préférence à base d'oxyde de zirconium ou d'oxyde de titane et de zirconium.

A titre d'illustration, les empilements peuvent comprendre des revêtements fonctionnels comprenant les séquences de couches suivantes :
- Nb/Ag/ Nb,
- NiCr / Ag / Nb,
- Nb/Ag / NiCr,
- NiCr/ Nb / Ag / Nb,
- NiCr / Nb / Ag / NiCr,
- NiCr/Ag / NiCr / Nb,
- NiCr/Ag / Nb / NiCr,
- Nb / NiCr/Ag / NiCr,
- Nb / NiCr/Ag / Nb,
- Nb/Ag / NiCr / Nb,
- Nb/Ag / Nb / NiCr,
- NiCr / Nb / NiCr / Ag / Nb,
- NiCr / Nb / NiCr / Ag / NiCr,
- NiCr / Nb / Ag / NiCr / Nb,
- NiCr / Nb / Ag / Nb / NiCr,
- NiCr / Ag / NiCr / Nb / NiCr,
- Nb / NiCr/Ag / NiCr / Nb,
- Nb / NiCr/Ag / Nb / NiCr,
- Nb/Ag / NiCr / Nb / NiCr,
- NiCr / Nb / NiCr / Ag / NiCr / Nb,
- NiCr / Nb / NiCr / Ag / Nb / NiCr,
- NiCr / Nb / Ag / NiCr / Nb / NiCr,
- Nb / NiCr / Ag / NiCr / Nb /NiCr,
- NiCr / Nb / NiCr / Ag / NiCr / Nb / NiCr,
avec :
Ag correspondant à une couche fonctionnelle métallique à base d'argent,
Nb correspondant à une couche fonctionnelle métallique ou à base de niobium,
NiCr correspondant à une couche métallique à base de nickel et/ou de chrome.

La première couche mentionnée correspond à la couche du revêtement fonctionnel la plus proche du substrat et la dernière couche correspond à la couche du revêtement fonctionnel la plus éloignée du substrat. Les couches de ces séquences sont de préférence directement au-contact.

Selon un mode de réalisation, l'invention concerne un matériau comprenant un substrat transparent revêtu d'un empilement de couches minces comprenant au moins un revêtement fonctionnel comprenant :
- au moins une couche fonctionnelle métallique à base d'argent présentant une épaisseur comprise entre 2 et 15 nm, de préférence de 2 à 6 nm,
- éventuellement au moins une couche de blocage choisie parmi les couches métalliques, les couches de nitrure métallique, les couches d'oxyde métallique et les couches d'oxynitrure métallique d'un ou plusieurs éléments choisis parmi le titane, le nickel, le chrome et le tantale telles que Ti, TiN, TiOx, Ta, TaN, Ni, NiN, Cr, CrN, NiCr, NiCrN,
- au moins une couche fonctionnelle métallique ou nitrurée à base de niobium située :
   - au contact d'au moins une partie de la couche fonctionnelle à base d'argent ou
   - séparée d'au moins une partie de la couche fonctionnelle à base d'argent par une ou plusieurs couches, choisies parmi des couches de blocage, dont la somme des épaisseurs est inférieure à 5 nm,
- de préférence, chaque couche métallique à base d'argent est disposée au contact et entre une ou plusieurs couches fonctionnelles métalliques ou nitrurées à base de niobium et/ou une ou plusieurs couches de blocage,
- la somme des épaisseurs de la ou les couches fonctionnelles à base de niobium situées directement au-contact ou séparée par une épaisseur inférieure à 5 nm d'au moins une partie de la couche fonctionnelle à base d'argent, est comprise entre 3 et 20 nm.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le matériau, c'est-à-dire le substrat transparent revêtu de l'empilement, est destiné à subir un traitement thermique à température élevée choisi parmi un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu de l'empilement peut donc être bombé et/ou trempé.

L'invention concerne également un procédé de préparation d'un matériau comprenant un substrat transparent revêtu d'un empilement de couches minces déposées par pulvérisation cathodique éventuellement assistée par champ magnétique, le procédé comporte la séquence d'étapes suivantes :
- on dépose sur le substrat transparent au moins un revêtement fonctionnel comprenant au moins une couche fonctionnelle à base d'argent présentant une épaisseur comprise entre 2 et 10 nm et au moins une couche fonctionnelle à base de niobium présentant une épaisseur comprise entre 2 et 10 nm, située en-dessous et/ou au-dessus et au contact d'au moins une partie de la couche fonctionnelle à base d'argent, puis
- on dépose un revêtement à base de matériaux diélectriques au-dessus de la couche fonctionnelle,
- on fait subir un traitement thermique au substrat ainsi revêtu.

Ce traitement thermique peut être réalisé à une température supérieure à 200 °C, supérieure à 300 °C ou supérieure à 400 °C, de préférence supérieure 500 °C.

Le traitement thermique est de préférence choisi parmi les traitements de trempe, de recuit, de recuit rapide.

Le traitement de trempe ou de recuit est généralement mis en oeuvre dans un four, respectivement de trempe ou de recuisson. L'intégralité du matériau, y compris donc le substrat, peut être portée à une température élevée, d'au moins 300°C dans le cas de la recuisson, et d'au moins 500°C, voire 600°C, dans le cas d'une trempe.

L'invention concerne également un vitrage comprenant au moins un matériau selon l'invention.

Le matériau ou le vitrage peut être sous forme de vitrage monolithique ou simple vitrage, de vitrage feuilleté ou d'un vitrage multiple notamment un double-vitrage ou un triple vitrage. L'invention concerne donc également un vitrage transparent comprenant au moins un matériau selon l'invention. Ces matériaux sont de préférence des vitrages montés sur un bâtiment ou un véhicule.

L'empilement est positionné dans le vitrage de sorte que la lumière incidente provenant de l'extérieur traverse le premier revêtement diélectrique avant de traverser la première couche métallique fonctionnelle.

Dans le cas d'un vitrage monolithique ou multiple, l'empilement est de préférence déposé en face 2, c'est-à-dire qu'il se trouve sur la face intérieure d'un substrat.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage. Toutefois, l'empilement peut également être déposé en face 4.

Les exemples qui suivent illustrent l'invention sans toutefois la limiter.

### Exemples

Des empilements de couches minces définis ci-après sont déposés sur des substrats en verre clair sodo-calcique.

Les empilements sont déposés, de manière connue, sur une ligne de pulvérisation cathodique (procédé magnétron) dans laquelle le substrat vient défiler sous différentes cibles.

Pour ces exemples, les conditions de dépôt des couches déposées par pulvérisation (pulvérisation dite « cathodique magnétron ») sont résumées dans le tableau ci-dessous.

| **Tab. 1** | **Cibles employées** | **Pression dépôt** | **Gaz** | **Indice*** |
|---|---|---|---|---|
| Si₃N₄ | Si:Al (92:8 % en pds) | 2-10*10⁻³ mbar | Ar:30-80 % - N₂:20-70 % | 2,00 |
| NiCr | Ni:Cr (80:20 % at.) | 1-5*10⁻³ mbar | Ar à 100 % | - |
| Ag | Ag | 2-3*10⁻³ mbar | Ar à 100 % | - |
| Nb | Nb | 5-10*10⁻³ mbar | Ar à 100 % | - |
| TiO₂ | TiOx | 1,5*10⁻³ mbar | Ar 88 % - O₂ 12% % | 2,32 |

| | | | | |
|---|---|---|---|---|
| at. : atomique ; pds : poids ; * : à 550 nm. | | | | |

Le tableau 2 liste les matériaux et les épaisseurs physiques en nm de chaque couche ou revêtement qui constitue les empilements de type MA et MB en fonction de leur position vis-à-vis du substrat porteur de l'empilement (dernière ligne en bas du tableau). Les épaisseurs données correspondent aux épaisseurs avant trempe.

| **Tab. 2** | **MA** | **MB** |
|---|---|---|
| Revêtement diélectrique | | |
| - TiOx | 9 nm | 9 nm |
| - Si₃N₄ | 37 nm | 37 nm |
| Revêtement fonctionnel | cf. Tab. 3 | cf. Tab. 3 |

| Revêtement diélectrique | | |
|---|---|---|
| - Si₃N₄ | 55 nm | 55 nm |
| Substrat : Verre | 4 mm | 4 mm |

Les matériaux des exemples MA1 à MA3 et MB1 à MB4 comprennent respectivement les empilements de type MA et MB sont deux séries d'essais différentes. Les empilements de ces séries qui différent par la nature du revêtement fonctionnel. Les revêtements fonctionnels comprennent une séquence des plusieurs couches définies dans le tableau 3. La première couche mentionnée correspond à la couche du revêtement fonctionnel la plus proche du substrat. Les épaisseurs données dans ce tableau sont des épaisseurs physiques en nanomètres.

| **Tab.3** | **Revêtement Fonctionnel (nm)** | **Ep. Tot.** | | | **Nb/Ag** |
|---|---|---|---|---|---|
| | | **Ag** | **Nb** | **RF** | |
| MA1 | Nb (2,3)/ Ag (6)/ Nb (4,2) | 6 | 6,5 | 12,5 | 1,08 |
| MA2 | Nb (2,3)/ Ag (5)/ Nb (4,5) | 5 | 6,8 | 11,8 | 1,36 |
| MA3 | Nb (2,3)/ Ag (4,5)/ Nb (4,7) | 4,5 | 7 | 11,5 | 1,56 |
| MB1 | Nb (2,3)/ Ag (5)/ Nb (4,5) | 5 | 6,8 | 11,8 | 1,36 |
| MB2 | Nb (1,5)/ NiCr (0,7)/ Ag (5)/ NiCr (0,7)/ Nb (3,8) | 5 | 5,3 | 11,7 | 1,06 |
| MB3 | Nb (1,4)/ NiCr (0,9)/ Ag (5)/ NiCr (0,9)/ Nb (3,6) | 5 | 5 | 11,8 | 1 |
| MB4 | NiCr (2,3)/ Ag (5)/ NiCr (4,5) | 5 | 0 | 11,8 | 0 |

### I. Performances « contrôle solaire » et colorimétrie

Le tableau 4 liste les principales caractéristiques optiques mesurées lorsque les matériaux MA1 à MA3 sont montés en simple vitrage, l'empilement étant positionné en face 2, la face 1 du vitrage étant la face la plus à l'extérieur du vitrage, comme habituellement.

Pour ces vitrages,
- TL indique la transmission lumineuse dans le visible en %, mesurée selon l'illuminant D65 à 2° Observateur ;
- RLe indique : la réflexion lumineuse dans le visible en %, mesurée selon l'illuminant D65 à 2° Observateur du côté de la face la plus à l'extérieur, la face 1 ;
- a*Re et b*Re indiquent les couleurs en réflexion a* et b* dans le système L*a*b* mesurées selon l'illuminant D65 à 2° Observateur du côté de la face la plus à l'extérieur et mesurées ainsi perpendiculairement au vitrage.
- RLi indique la réflexion lumineuse dans le visible en %, mesurée selon l'illuminant D65 à 2° Observateur du côté de la face intérieure, la face 2 ;
- a*Ri et b*Ri indiquent les couleurs en réflexion a* et b* dans le système L*a*b* mesurées selon l'illuminant D65 à 2° Observateur du côté de la face intérieure et mesurées ainsi perpendiculairement au vitrage,
- Abs. indique l'absorbance dans le visible en % correspond à (100 - TL% - RLi%) mesurée selon l'illuminant D65 à 2° Observateur.

Ces caractéristiques sont mesurées pour le vitrage muni de l'empilement d'abord en sortie de la ligne magnétron puis après un traitement thermique de type trempe consistant notamment en un recuit à 650 °C pendant 10 minutes.

Le tableau 4 précise également les variations relatives de chaque caractéristique imputable au traitement thermique. Par exemple, la variation de la transmission lumineuse a été calculée de la façon suivante : ΔTL = (TL% après TT - TL% avant TT)/ (TL% avant TT) x 100 avec TT signifiant traitement thermique.

| **Tab.4** | **TT** | **Réflexion int.** | | | **Réflexion ext.** | | | **Abs.** | **TL** | **Δ TL** | **Δ RLi** | **Δ RLe** | **Δ Abs** |
|---|---|---|---|---|---|---|---|---|---|---|---|---|---|
| | | RLi | a*Ri | b*Ri | RLe | a*Re | b*Re | | | | | | |
| MA1 | Avant | 3,8 | 26,1 | -19,4 | 15,2 | 2,3 | -16,4 | 43,3 | 53,0 | 4 | 5 | 8 | 1 |
| | Après | 4 | 24,7 | -14,4 | 16,4 | 1,7 | -13,9 | 43,9 | 50,8 | | | | |
| MA2 | Avant | 3,9 | 26 | -16,9 | 15,4 | 2,3 | -15,8 | 43,3 | 52,8 | 3 | 5 | 8 | 4 |
| | Après | 4,1 | 24,9 | -13,1 | 16,7 | 1,7 | -12,7 | 44,9 | 51,0 | | | | |
| MA3 | Avant | 4,8 | 22,1 | -5,7 | 15 | 2,8 | -15,1 | 43,3 | 51,9 | 2 | 4 | 7 | 1 |
| | Après | 5 | 20,3 | -1 | 16 | 2,1 | -11,8 | 43,9 | 51,1 | | | | |

Le tableau 5 concerne les performances des matériaux et montre les variations relatives d'émissivité imputable au traitement thermique. La variation d'émissivité a été calculée de la façon suivante : Δε = (ε après TT - ε avant TT)/ (ε avant TT) x 100.

| **Tab.5** | **TT** | **Performances** | | | | **Δ ε** |
|---|---|---|---|---|---|---|
| | | 9 | s | ε | Ug | |
| MA1 | Avant | 46,8 | 1,13 | 22,5 | 3,9 | 5 |
| | Après | 48,1 | 1,10 | 21,3 | 3,9 | |
| MA2 | Avant | 47,4 | 1,11 | 28,5 | 4,1 | 1 |
| | Après | 46,7 | 1,09 | 28,1 | 4,1 | |
| MA3 | Avant | 47,2 | 1,10 | 32,2 | 4,3 | 0 |
| | Après | 47,4 | 1,08 | 32,3 | 4,3 | |

| | | | | | | |
|---|---|---|---|---|---|---|
| « g » : Facteurs solaire en %; « s » : Sélectivité ; « ε » : Emissivité en % ; « Ug » : coefficient de transmission thermique. | | | | | | |

Selon l'invention, le revêtement fonctionnel selon l'invention permet d'obtenir une valeur de la transmission lumineuse du substrat relativement élevée, tout en conservant un effet isolant notable, malgré l'épaisseur très faible de la couche fonctionnelle métallique à base d'argent, après un traitement thermique.

Les exemples montrent que les matériaux selon l'invention présentent un très bon compromis entre la transmission lumineuse TL, le facteur solaire et l'émissivité. Il apparaît clairement que ses très bonnes propriétés initiales ne sont absolument pas dégradées lors que le vitrage est soumis au traitement thermique.

La solution de l'invention permet d'obtenir une stabilité des caractéristiques du vitrage avant et après le traitement thermique. Les matériaux présentent ainsi une remarquable stabilité des caractéristiques optiques et colorimétriques avant et après le traitement thermique.

Les matériaux selon l'invention présentent notamment un coefficient d'émissivité, suffisamment faible notamment inférieure à 35 %, voire inférieure à 25 %. De plus, après le traitement thermique, les matériaux selon l'invention présentent une émissivité de préférence sensiblement améliorée, ou tout au moins sensiblement inchangée.

### II. Tests de résistance au vieillissement et à l'abrasion

Des essais selon la norme EN 1096 pour évaluer la résistance de l'empilement de couches minces au vieillissement climatique et à l'abrasion ont été réalisé et notamment :
- le test de résistance aux attaques acides (Annexe C de la norme) appelé Test SO₂,
- le test de résistance au brouillard salin neutre (Annexe D de la norme) appelé Test BSN,
- le test de résistance à la condensation neutre (Annexe B de la norme) appelé Test haute humidité HH,
- le test de résistance à l'abrasion également Test Taber.

Un test Erichsen à la Brosse également été réalisé.

Une analyse par microscopie optique après certains tests a été réalisée. Elle permet de mettre en évidence la présence de défauts. Les appréciations suivantes ont rapportées après observation microscopique :
«-» : Présence de beaucoup de piqures,
«0» : Présence de quelques piqures,
«+» : Pratiquement pas de piqures.

Les appareils suivants ont été utilisés :
- Minolta n°ISO 1325,
- Enceinte SO₂ n°ISO 1038,
- Perkin Elmer n°ISO 1043, Miroir W1 n°1066.
- Enceinte Brouillard salin neutre (BSN) n°ISO 981
- Enceinte Haute humidité (HH),
- Cabine à lumière n°ISO 732,
- Microscope n°ISO 185.

La taille des échantillons est de 10x10cm. A défaut d'indications contraires, les mesures ont été réalisées après traitement thermique tel que défini ci-dessus.

### II.1. Tests sur les matériaux de type MA

### a. Test SO₂

| **Tab. 6** | **Cycles** | **ΔE couche** | | ε | |
|---|---|---|---|---|---|
| | | **BT** | **AT** | **BT** | **AT** |
| MA1 | 0 | - | - | 23,67 | 22,73 |
| | 15 | 0,33 | 1,77 | 24,10 | 22,86 |
| | 25 | 3,49 | 2,67 | 24,64 | 22,71 |
| MA3 | 0 | - | - | 33,01 | 33,82 |
| | 15 | 0,69 | 0,24 | 33,34 | 33,83 |
| | 25 | 3,21 | 1,09 | 33,41 | 33,77 |
| | 45 | 1,87 | 0,94 | 33,51 | 33,91 |

| | | | | | |
|---|---|---|---|---|---|
| BT : Avant TT, AT : Après TT. | | | | | |

| **Tab. 7** | **Cycles** | **Cabine à lumière** | | **Microscope optique** | |
|---|---|---|---|---|---|
| | | **BT** | **AT** | **BT** | **AT** |
| MA1 | 25 | NOK | OK | - | + |
| MA3 | 25 | OK | OK | + | + |
| | 45 | OK | OK | + | + |

Les matériaux MA1 après traitement thermique et MA3 avant et après traitement thermique sont satisfaisants. L'exemple MA1 avant traitement thermique (BT) n'est pas satisfaisant après 25 cycles. L'émissivité augmente, l'aspect visuel à la cabine à lumière ainsi que les photographies au microscope optique ne sont pas acceptables.

### b. Test haute humidité (HH)

Afin d'évaluer la résistance chimique de l'empilement, un test de vieillissement accéléré appelé test de résistance à haute humidité a été réalisé. Ce test consiste à placer un matériau dans une étuve chauffée à 120 °C pendant 480 minutes présentant une humidité relative de 100%. L'observation visuelle du matériau selon l'invention après traitement thermique permet de constater l'absence de flou. Les matériaux MA1 après traitement thermique et MA3 avant et après traitement thermique ne sont pas dégradés après avoir été soumis 56 jours au test HH. Seul le matériau MA1 avant traitement thermique BT est dégradé lorsqu'il est observé à la cabine à lumière.

### c. Test de résistance au brouillard salin neutre (BSN)

Les matériaux MA1 à MA3 ne sont pas dégradés après avoir été soumis 56 jours au test BSN. MA1 avant traitement thermique BT est dégradé lorsqu'il est observé à la cabine à lumière Seuls quelques points de corrosion sont observés sur MA1 après traitement thermique.

### d. Tests de résistance à l'abrasion

Le test de résistance à l'abrasion a été réalisé avec une charge de 500 g pendant 500 cycles. La TL et le Flou sont donnés en %.

| **Tab. 8** | **TT** | **Initial** | | **500 cycles** | | **Δ** | |
|---|---|---|---|---|---|---|---|
| | | **TL** | **Flou** | **TL** | **Flou** | **Δ TL** | **Δ Flou** |
| MA3 | Avant | 49,5 | 0,07 | 54,4 | 5,64 | 4,9 | 5,57 |
| MA3 | Après | 49,7 | 0,04 | 51 | 4,1 | 1,3 | 4,06 |

Le matériau MA3 est satisfaisant. Les résultats sont acceptables avec des variations de transmission lumineuse inférieure à 5 % pour le test à l'abrasion avant et après traitement thermique.

### e. Test Erichsen à la Brosse (EBT)

Les matériaux MA1 à MA3 ont été soumis au test Erichsen à la Brosse (EBT), pendant 1000 cycles, avant (EBT) et après trempe (TTEBT). Ce test consiste à frotter l'empilement à l'aide d'une brosse à poil en matériau polymère, l'empilement étant recouvert d'eau. On considère qu'un vitrage satisfait au test si aucune marque n'est visible à l'oeil nu. Les matériaux MA1 à MA3 satisfont le test avant et après traitement thermique.

### II.2. Tests sur matériaux de type MB

### a. Test au SO₂

| **Tab.9** | **SO₂** | **ΔEi** | **ΔEe** | **ε** |
|---|---|---|---|---|
| MB. 1 | initial | 4,19 | 0,31 | 26,7 |
| | 35 cy. | | | 26,7 |
| MB. 2 | initial | 0,91 | 0,11 | 26,7 |
| | 35 cy. | | | 26,8 |
| MB. 3 | initial | 1,04 | 0,11 | 26,9 |
| | 35 cy. | | | 26,9 |
| MB. 4 | initial | 15,68 | 3,86 | 25,7 |
| | 15 cy. | | | 35,6 |

| **Tab.10** | **SO2** | **Cabine à lumière** | **Microscope** |
|---|---|---|---|
| MB1 | 35 cy. | OK | 0 |
| MB 2 | 35 cy. | OK | 0 |
| MB3 | 35 cy. | OK | 0 |
| MB4 | 15 cy. | NOK | - |

Les exemples MB1 à MB3 sont satisfaisants contrairement à l'exemple comparatif MB4 qui ne l'est pas. L'exemple MB4 ne comprend pas de couche comprenant du niobium mais uniquement des couches de blocages. En effet, le ΔEi de l'exemple MB4 est beaucoup trop élevé (>5). De plus, l'émissivité a également trop augmentée (plus de 2 points).

### b. Test BSN

| **Tab.11** | **BSN (jours)** | **ΔEi** | **ΔEe** | **ε** |
|---|---|---|---|---|
| MB. 1 | initial | 0,87 | 0,19 | 26,3 |
| | 42 | | | 26,3 |
| MB. 2 | initial | 2,81 | 0,15 | 26,7 |
| | 42 | | | 26,8 |
| MB. 3 | initial | 1,66 | 0,23 | 26,8 |
| | 42 | | | 27 |
| MB. 4 | initial | 13,18 | 5,06 | 26,3 |
| | 14 | | | 34,1 |

| **Tab.12** | **Cabine à lumière** | **Microscope** |
|---|---|---|
| MB. 1 | Ok | + |
| MB. 2 | Ok | + |
| MB. 3 | Ok | + |
| MB. 4 | NOk | - |

Les exemples MB1 à MB3 sont satisfaisants contrairement à l'exemple comparatif MB4 qui ne l'est pas. En effet, le ΔE de l'exemple MB4 est beaucoup trop élevé (>5). De plus, l'émissivité a également trop augmentée (plus de 2 points).

### c. Test haute humidité (HH)

| **Tab.10** | **HH (jours)** | **ΔEi** | **ΔEe** | **ε** |
|---|---|---|---|---|
| MB. 1 | initial | 1,29 | 0,10 | 26,3 |
| | 42 | | | 26,3 |
| MB. 2 | initial | 1,71 | 0,19 | 26 |
| | 42 | | | 26 |
| MB. 3 | initial | 3,30 | 0,09 | 26,9 |
| | 42 | | | 26,4 |
| MB. 4 | initial | 0,42 | 0,25 | 26,8 |
| | 42 | | | 28,8 |

| **Tab.11** | **Cabine à lumière** | **Microscope** |
|---|---|---|
| MB. 1 | OK | + |
| MB. 2 | OK | + |
| MB. 3 | OK | + |
| MB. 4 | OK | + |

Les exemples MB1 à MB3 sont satisfaisants contrairement à l'exemple comparatif MB4 qui ne l'est pas. En effet, l'émissivité de l'exemple MB4 a trop augmentée (2 points).

### d. Tests de résistance à l'abrasion

| **Résistance à l'abrasion après traitement thermique** | | | | | | |
|---|---|---|---|---|---|---|
| **Tab.13** | **Initial** | | **500 cycles** | | **Delta (500 cycles)** | |
| | **TL** | **Flou** | **TL** | **Flou** | **Δ TL** | **Δ Flou** |
| MB. 1 | 51,3 | 0,3 | 60,8 | 3,61 | 9,50 | 3,31 |
| MB. 2 | 51,9 | 0,41 | 57,5 | 3,92 | 5,60 | 3,51 |
| MB. 3 | 52,2 | 0,44 | 59,0 | 3,74 | 6,80 | 3,30 |
| MB. 4 | 59,4 | 0,35 | 76,8 | 3,10 | 17,40 | 2,75 |

Les exemples MB2 et MB3 avec couche de blocage présentent les meilleurs résultats avec notamment une variation de transmission lumineuse beaucoup plus faible.

### II.3. Conclusion

Les revêtements fonctionnels comprenant une couche d'argent comprise entre deux couches à base de niobium avec éventuellement une ou plusieurs couches de blocage sont préférés.

La présence d'une fine couche de blocage au-dessus et/ou en dessous de la couche d'argent donne de bons résultats en termes de résistance à l'abrasion.

Les meilleurs résultats sont obtenus lorsque l'épaisseur des couches fonctionnelles à base d'argent dans un revêtement fonctionnel, est par ordre de préférence croissant inférieure à 6 nm, comprise de 3 à 6 nm, de 4 à 5,5 nm. Pour cela, on peut comparer les résultats obtenus avec les matériaux MA1 et MA3.

## Revendications

1. Matériau comprenant un substrat transparent revêtu d'un empilement de couches minces comprenant au moins un revêtement fonctionnel comprenant :
- au moins une couche fonctionnelle métallique à base d'argent présentant une épaisseur comprise entre 2 et 15 nm,
- éventuellement au moins une couche de blocage choisie parmi les couches métalliques, les couches de nitrure métallique, les couches d'oxyde métallique et les couches d'oxynitrure métallique d'un ou plusieurs éléments choisis parmi le titane, le nickel, le chrome et le tantale telles que Ti, TiN, TiOx, Ta, TaN, Ni, NiN, Cr, CrN, NiCr, NiCrN,
- au moins une couche fonctionnelle métallique ou nitrurée à base de niobium située :
- au contact d'au moins une partie de la couche fonctionnelle à base d'argent ou
- séparée d'au moins une partie de la couche fonctionnelle à base d'argent par une ou plusieurs couches, choisies parmi des couches de blocage, dont la somme des épaisseurs est inférieure à 5 nm,
- de préférence, chaque couche métallique à base d'argent est disposée au contact et entre une ou plusieurs couches fonctionnelles métalliques ou nitrurées à base de niobium et/ou une ou plusieurs couches de blocage,
- la somme des épaisseurs de la ou les couches fonctionnelles à base de niobium situées directement au-contact ou séparée par une épaisseur inférieure à 5 nm d'au moins une partie de la couche fonctionnelle à base d'argent, est comprise entre 4 et 20 nm.

2. Matériau selon la revendication 1, **caractérisé en ce que** le revêtement fonctionnel comprend au moins une couche fonctionnelle à base de niobium située au-dessus d'au moins une partie de la couche fonctionnelle à base d'argent et présentant une épaisseur comprise entre 2 et 10 nm.

3. Matériau selon l'une quelconque des revendications précédentes **caractérisé en ce que** le revêtement fonctionnel comprend au moins une couche de niobium située en-dessous d'au moins une partie de la couche fonctionnelle à base d'argent et présentant une épaisseur comprise entre 1 et 10 nm.

4. Matériau selon l'une quelconque des revendications précédentes **caractérisé en ce que** le revêtement fonctionnel comprend une couche de blocage située en-dessous et/ou au-dessus d'une couche métallique fonctionnelle à base d'argent.

5. Matériau selon l'une quelconque des revendications précédentes, **caractérisé en ce que** l'épaisseur d'une couche de blocage est d'au moins 0,2 nm et d'au plus 2,0 nm.

6. Matériau selon l'une des revendications précédentes, dans lequel le revêtement fonctionnel présente une épaisseur comprise entre 5 et 20 nm.

7. Matériau selon l'une quelconque des revendications précédentes **caractérisé en ce que** l'empilement de couches minces comprend au moins un revêtement fonctionnel et au moins deux revêtements diélectriques comportant au moins une couche diélectrique, de manière à ce que chaque revêtement fonctionnel soit disposé entre deux revêtements diélectriques.

8. Matériau selon l'une quelconque des revendications précédentes **caractérisé en ce que** l'empilement de couches minces comprend un seul revêtement fonctionnel.

9. Matériau selon l'une quelconque des revendications précédentes **caractérisé en ce que** l'empilement de couches minces comprend au moins un revêtement diélectrique comportant au moins une couche diélectrique constituée d'un nitrure ou d'un oxynitrure d'aluminium et/ou de silicium ou d'un oxyde mixte de zinc et d'étain, de préférence d'épaisseur comprise entre 20 et 70 nm.

10. Matériau selon l'une quelconque des revendications précédentes, **caractérisé en ce que** le ou les revêtements diélectriques situés en-dessous du revêtement fonctionnel comportent une seule couche constituée d'un nitrure ou d'un oxynitrure d'aluminium et/ou de silicium, d'épaisseur comprise entre 30 et 70 nm, de préférence d'une couche constituée de nitrure de silicium, comprenant en outre éventuellement de l'aluminium.

11. Matériau selon l'une quelconque des revendications précédentes, **caractérisé en ce que** le ou les revêtements diélectriques situés au-dessus du revêtement fonctionnel comportent :
- au moins couche constituée d'un nitrure ou d'un oxynitrure d'aluminium et/ou de silicium, d'épaisseur comprise entre 30 et 60 nm, de préférence d'une couche constituée de nitrure de silicium, comprenant en outre éventuellement de l'aluminium,
- éventuellement au moins une couche de protection d'épaisseur comprise entre 2 et 10 nm.

12. Matériau selon l'une quelconque des revendications précédentes tel que le substrat transparent est :
- en verre, notamment silico-sodo-calcique ou
- en polymère notamment en polyéthylène, en polyéthylène téréphtalate ou en polyéthylène naphtalate.

13. Procédé de préparation d'un matériau comprenant un substrat transparent revêtu d'un empilement de couches minces déposées par pulvérisation cathodique éventuellement assistée par champ magnétique, le procédé comporte la séquence d'étapes suivantes :
- on dépose sur le substrat transparent au moins un revêtement fonctionnel comprenant au moins une couche fonctionnelle à base d'argent présentant une épaisseur comprise entre 2 et 10 nm et au moins une couche fonctionnelle à base de niobium présentant une épaisseur comprise entre 2 et 10 nm, située en-dessous et/ou au-dessus et au contact d'au moins une partie de la couche fonctionnelle à base d'argent, puis
- on dépose un revêtement à base de matériaux diélectriques au-dessus de la couche fonctionnelle,
- on fait subir un traitement thermique au substrat ainsi revêtu.

14. Vitrage comprenant au moins un matériau selon l'une des revendications de matériau 1 à 12.

15. Vitrage selon la revendication précédente, caractérisé en qu'il est sous forme de vitrage monolithique, feuilleté ou multiple, en particulier double vitrage ou triple vitrage.

## Patentansprüche

1. Material mit einem transparenten Substrat, das mit einem Stapel dünner Schichten beschichtet ist, umfassend mindestens eine Funktionsbeschichtung, umfassend:
- mindestens eine metallische Funktionsschicht auf Silberbasis, die eine Dicke zwischen 2 und 15 nm aufweist,
- gegebenenfalls mindestens eine Sperrschicht, die aus Metallschichten, Metallnitridschichten, Metalloxidschichten und Metalloxinitridschichten eines oder mehrerer Elemente gewählt ist, die aus Titan, Nickel, Chrom und Tantal gewählt sind, wie Ti, TiN, TiOx, Ta, TaN, Ni, NiN, Cr, CrN, NiCr, NiCrN,
- mindestens eine metallische oder nitridierte Funktionsschicht auf Niobbasis, die sich befindet:
- in Kontakt mit mindestens einem Teil der Funktionsschicht auf Silberbasis oder
- von mindestens einem Teil der Funktionsschicht auf Silberbasis durch eine oder mehrere Schichten getrennt, die unter Sperrschichten gewählt sind, deren Summe der Dicken weniger als 5 nm beträgt,
- wobei jede Metallschicht auf Silberbasis bevorzugt in Kontakt mit und zwischen einer oder mehreren metallischen oder nitridierten Funktionsschichten auf Niobbasis und/oder einer oder mehreren Sperrschichten angeordnet ist,
- die Summe der Dicken der Funktionsschicht oder der Funktionsschichten auf Niobbasis, die sich direkt in Kontakt mit oder durch eine Dicke von weniger als 5 nm getrennt von mindestens einem Teil der Funktionsschicht auf Silberbasis befinden, zwischen 4 und 20 nm beträgt.

2. Material nach Anspruch 1, **dadurch gekennzeichnet, dass** die Funktionsbeschichtung mindestens eine Funktionsschicht auf Niobbasis umfasst, die sich über mindestens einem Teil der Funktionsschicht auf Silberbasis befindet und eine Dicke zwischen 2 und 10 nm aufweist.

3. Material nach einem der vorhergehenden Ansprüche, **dadurch gekennzeichnet, dass** die Funktionsbeschichtung mindestens eine Niobschicht umfasst, die sich unter mindestens einem Teil der Funktionsschicht auf Silberbasis befindet und eine Dicke zwischen 1 und 10 nm aufweist.

4. Material nach einem der vorhergehenden Ansprüche, **dadurch gekennzeichnet, dass** die Funktionsbeschichtung eine Sperrschicht umfasst, die sich unter und/oder über einer metallischen Funktionsschicht auf Silberbasis befindet.

5. Material nach einem der vorhergehenden Ansprüche, **dadurch gekennzeichnet, dass** die Dicke einer Sperrschicht mindestens 0,2 nm und höchstens 2,0 nm beträgt.

6. Material nach einem der vorhergehenden Ansprüche, bei dem die Funktionsbeschichtung eine Dicke zwischen 5 und 20 nm aufweist.

7. Material nach einem der vorhergehenden Ansprüche, **dadurch gekennzeichnet, dass** der Stapel dünner Schichten mindestens eine Funktionsbeschichtung und mindestens zwei dielektrische Beschichtungen umfasst, die mindestens eine dielektrische Schicht umfassen, sodass jede Funktionsbeschichtung zwischen zwei dielektrischen Beschichtungen angeordnet ist.

8. Material nach einem der vorhergehenden Ansprüche, **dadurch gekennzeichnet, dass** der Stapel dünner Schichten eine einzige Funktionsbeschichtung umfasst.

9. Material nach einem der vorhergehenden Ansprüche, **dadurch gekennzeichnet, dass** der Stapel dünner Schichten mindestens eine dielektrische Beschichtung umfasst, die mindestens eine dielektrische Schicht umfasst, die aus einem Aluminium- und/oder Siliciumnitrid oder -oxinitrid oder einem Zink-Zinn-Mischoxid besteht, bevorzugt mit einer Dicke zwischen 20 und 70 nm.

10. Material nach einem der vorhergehenden Ansprüche, **dadurch gekennzeichnet, dass** die dielektrische Beschichtung oder die dielektrischen Beschichtungen, die sich unter der Funktionsbeschichtung befinden, eine einzige Schicht, die aus einem Aluminium-und/oder Siliciumnitrid oder -oxinitrid besteht, mit einer Dicke zwischen 30 und 70 nm umfassen, bevorzugt eine aus Siliciumnitrid bestehende Schicht, die gegebenenfalls ferner Aluminium umfasst.

11. Material nach einem der vorhergehenden Ansprüche, **dadurch gekennzeichnet, dass** die dielektrische Beschichtung oder die dielektrischen Beschichtungen, die sich über der Funktionsbeschichtung befinden, umfassen:
- mindestens eine Schicht, die aus einem Aluminium- und/oder Siliciumnitrid oder -oxinitrid besteht, mit einer Dicke zwischen 30 und 60 nm, bevorzugt eine aus Siliciumnitrid bestehende Schicht, die gegebenenfalls ferner Aluminium umfasst,
- gegebenenfalls mindestens eine Schutzschicht mit einer Dicke zwischen 2 und 10 nm.

12. Material nach einem der vorhergehenden Ansprüche, wobei das transparente Substrat besteht:
- aus Glas, insbesondere Kalk-Natron-Silikatglas, oder
- aus Polymer, insbesondere aus Polyethylen, aus Polyethylenterephthalat oder aus Polyethylennaphthalat.

13. Verfahren zur Herstellung eines Materials mit einem transparenten Substrat, das mit einem Stapel dünner Schichten beschichtet ist, die durch gegebenenfalls magnetfeldgestützte Kathodenzerstäubung aufgebracht werden, wobei das Verfahren die Abfolge folgender Schritte umfasst:
- auf das transparente Substrat wird mindestens eine Funktionsbeschichtung aufgebracht, die mindestens eine Funktionsschicht auf Silberbasis, die eine Dicke zwischen 2 und 10 nm aufweist, und mindestens eine Funktionsschicht auf Niobbasis umfasst, die eine Dicke zwischen 2 und 10 nm aufweist und die sich unter und/oder über und in Kontakt mit mindestens einem Teil der Funktionsschicht auf Silberbasis befindet, dann
- wird über der Funktionsschicht eine Beschichtung auf Basis dielektrischer Materialien aufgebracht,
- und das so beschichtete Substrat wird einer Wärmebehandlung unterzogen.

14. Verglasung mit mindestens einem Material nach einem der vorhergehenden Ansprüche 1 bis 12.

15. Verglasung nach dem vorhergehenden Anspruch, **dadurch gekennzeichnet, dass** sie in Form einer Einsfach-, Verbund- oder Mehrfachverglasung, insbesondere einer Doppelverglasung oder Dreifachverglasung, vorliegt.

## Claims

1. A material comprising a transparent substrate coated with a stack of thin layers comprising at least one functional coating comprising:
- at least one silver-based metal functional layer exhibiting a thickness of between 2 and 15 nm,
- optionally at least one blocking layer chosen from metal layers, metal nitride layers, metal oxide layers and metal oxynitride layers of one or more elements chosen from titanium, nickel, chromium and tantalum, such as Ti, TiN, TiOₓ, Ta, TaN, Ni, NiN, Cr, CrN, NiCr or NiCrN,
- at least one niobium-based metal or nitride functional layer located:
- in contact with at least a portion of the silver-based functional layer or
- separated from at least a portion of the silver-based functional layer by one or more layers chosen from blocking layers, the sum of the thicknesses of which is less than 5 nm,
- preferably, each silver-based metal layer is positioned in contact and between one or more niobium-based metal or nitride functional layers and/or one or more blocking layers,
- the sum of the thicknesses of the niobium-based functional layer or layers, located directly in contact with or separated by a thickness of less than 5 nm from at least a portion of the silver-based functional layer, is between 4 and 20 nm.

2. The material as claimed in claim 1, **characterized in that** the functional coating comprises at least one niobium-based functional layer located above at least a portion of the silver-based functional layer and exhibiting a thickness of between 2 and 10 nm.

3. The material as claimed in either one of the preceding claims, **characterized in that** the functional coating comprises at least one niobium layer located below at least a portion of the silver-based functional layer and exhibiting a thickness of between 1 and 10 nm.

4. The material as claimed in any one of the preceding claims, **characterized in that** the functional coating comprises a blocking layer located below and/or above a silver-based metal functional layer.

5. The material as claimed in any one of the preceding claims, **characterized in that** the thickness of a blocking layer is at least 0.2 nm and at most 2.0 nm.

6. The material as claimed in one of the preceding claims, in which the functional coating exhibits a thickness of between 5 and 20 nm.

7. The material as claimed in any one of the preceding claims, **characterized in that** the stack of thin layers comprises at least one functional coating and at least two dielectric coatings comprising at least one dielectric layer, so that each functional coating is positioned between two dielectric coatings.

8. The material as claimed in any one of the preceding claims, **characterized in that** the stack of thin layers comprises just one functional coating.

9. The material as claimed in any one of the preceding claims, **characterized in that** the stack of thin layers comprises at least one dielectric coating comprising at least one dielectric layer consisting of a nitride or of an oxynitride of aluminum and/or of silicon or of a mixed zinc tin oxide, preferably with a thickness of between 20 and 70 nm.

10. The material as claimed in any one of the preceding claims, **characterized in that** the dielectric coating or coatings located below the functional coating comprise just one layer consisting of a nitride or of an oxynitride of aluminum and/or of silicon, with a thickness of between 30 and 70 nm, preferably of a layer consisting of silicon nitride, optionally additionally comprising aluminum.

11. The material as claimed in any one of the preceding claims, **characterized in that** the dielectric coating or coatings located above the functional coating comprise:
- at least layer consisting of a nitride or of an oxynitride of aluminum and/or of silicon, with a thickness of between 30 and 60 nm, preferably of a layer consisting of silicon nitride, optionally additionally comprising aluminum,
- optionally at least one protective layer with a thickness of between 2 and 10 nm.

12. The material as claimed in any one of the preceding claims, such that the transparent substrate is:
- made of glass, in particular soda-lime-silica glass, or
- made of polymer, in particular of polyethylene, of polyethylene terephthalate or of polyethylene naphthalate.

13. A process for the preparation of a material comprising a transparent substrate coated with a stack of thin layers deposited by cathode sputtering, optionally magnetic-field-assisted cathode sputtering, the process comprises the sequence of following stages:
- at least one functional coating comprising at least one silver-based functional layer exhibiting a thickness of between 2 and 10 nm and at least one niobium-based functional layer exhibiting a thickness of between 2 and 10 nm, located below and/or above and in contact with at least a portion of the silver-based functional layer, is deposited on the transparent substrate, then
- a coating based on dielectric materials is deposited above the functional layer,
- the substrate thus coated is subjected to a heat treatment.

14. A glazing comprising at least one material as claimed in one of the material claims 1 to 12.

15. The glazing as claimed in the preceding claim, **characterized in that** it is in the form of a monolithic, laminated or multiple glazing, in particular a double glazing or a triple glazing.
